# EUROPEAN PATENT APPLICATION

(11) **EP 1 359 101 A2**
(43) Date of publication of application: **05.11.2003**
(21) Application number: 03009476.7
(22) Date of filing: 26.04.2003
(51) Int. Cl.: B65G 47/90

(54) **Device for transporting and stacking flat products**

(30) Priority: 03.05.2002 IT VI20020082
(71) Applicant: 3 Erre Automazioni S.R.L., 36010 Chiuppano (Vicenza) (IT)
(72) Inventor: Bortoloso, Roberto, 36010 Chiuppano (Vicenza) (IT)
(74) Representative: Bettello, Pietro, Dott. Ing.

(57) **Abstract**

Concerns a controlled-opening discharge group for moving products such as panels made from wood, plastic, polystyrene, and the like, which takes care of picking up said products arranged in series on a single plane to reposition them on another work plane, individually or piled on top of each other, so as to form piles with a predetermined number, type and size of the panels themselves. Such a discharge group is characterised in that the trolley, which slides on a bridge, supports at least two columns which act as gripper heads.

## Description

The present finding regards a controlled opening discharge group.

As is well known, in working units and lines there is the step of moving flat semi-worked products, such as panels made from wood, plastic, polystyrene, and the like, with which one takes care of lifting said products arranged in series on a single plane to reposition them on another work plane, individually or piled on top of one another, so as to form piles with a predetermined number, type and size of the panels.

In the current state of the art, the discharge group substantially consists of a trolley which slides alternately on a bridge, which lies over both the product pick-up zone and the release zone thereof.

The trolley is equipped with a gripper head equipped with alternating vertical motion so as to be able to position itself at the different heights corresponding firstly to the pick-up plane and then in line with the height of the discharge plane or the height of the ready formed pile of deposited products.

Operatively, from the combination of the alternating horizontal rectilinear motion of the trolley with the alternating vertical movement of the gripper head anthropomorphous movement is realised on a vertical plane with which the product is picked up, for example by the feed roller unit, arranged upstream of the moving group, to deposit said product above a pallet or another roller unit, arranged downstream of said group.

A first drawback displayed by known discharge groups derives from the fact that they use a gripper head equipped with a single pair of pincers, for which reason it is possible to pick up just a single product, or else many products arranged aligned in series, but which must all have the same width to be able to be taken, all together and simultaneously, by the two opposite arms of the pincer itself.

A second drawback derives from the fact that, with the use of a single pair of pincers, it is not possible to deposit the products picked up by said single pair of pincers on two or more discharge zones since, obviously, with the opening of the arms of the pincers all of the supported products drop simultaneously.

A third drawback derives from the fact that the two pairs of pincers, having to always operate on the same plane, since connected to a single gripper head, cannot pick up products arranged on mutually different planes, just as the discharge of the aforementioned products on work surfaces or on piles arranged at different heights is made problematic since, with the simultaneous opening of the two pairs of pincers whilst one of the products, the one which deposits on the highest discharge plane, places down regularly, the other, however, due to the difference in level between the aforementioned two discharge planes, free falls, with the consequence of not being able to be positioned regularly.

All of this slows down the moving operation since, for every product and/or for every deposit on many discharge zones, the gripper head must necessarily repeat the pick up/transportation/discharge and return operation.

The purpose of the present finding is that of realising a high-productivity discharge group, in which the moving time of the group is reduced to a minimum for its transfer from the pick up zone of the products to the deposit and return thereof.

A further purpose of the finding is that of realising a discharge group which allows the simultaneous moving of at least two products of different widths.

A further purpose of the finding is to realise a discharge group which is capable of depositing many products, picked up simultaneously, on different discharge planes, during a single moving operation.

A further purpose of the finding is that of realising a discharge group with different moving programmes, in relation to the different sizes of the products to be treated, without the need to modify the structure of the gripper head.

A further purpose of the finding is that of realising a discharge group which is simple to construct and which is made with parts available on the market.

Such purposes are obtained with the realisation of a discharge group in which the trolley, which slides on the bridge, supports at least two columns which act as gripper heads and which are independent from each other.

In such a way each pair of pincers, coupled with the two or more columns, can pick up products even of different widths, as well as deposit them even on distinct roller units since, given that said pincers are independent from each other, they can operate with a so-called "controlled" opening, i.e. regulated through a PLC program which reads the type and size of the different products or plates going in and, consequently, defines the working parameters of the discharge group, in particular in which discharge zone and with which order to deposit each individual panel or pack of panels.

Moreover, to ease both the pick up and deposit of the products, the finding foresees that the arms of each pair of pincers can move independently from each other and also that the two movements of each arm, that of translation on the support bar and that of angular rotation on its axis, are controlled by distinct and independent devices, which allows an asymmetric displacement of the two arms with respect to the central axis of the support bar.

With such a constructive solution it is thus possible to pick up panels, as well as of different widths, also not arranged centrally on the pick up plane.

Finally, the finding foresees that a presser, which allows the canti-levered transportation of the panels, be associated with each arm.

The finding shall become clearer through the description of a possible embodiment thereof, described as a non-limiting example, with the help of the attached tables of drawings, where:
- figs. 1, 2 and 3 (Tav I) represent three orthogonal views of a unit equipped with the discharge group according to the finding;
- fig. 4 represents an elevated view of the discharge group in working conditions;
- figs. 5, 6 and 7 (Tav. II) represent three orthogonal views of the discharge group according to the finding;
- figs. 8 to 15 (Tavv. III-VI) represent the discharge steps of three different panels through the discharge group according to the finding;
- figs. 16 and 17 (Tav.VII) respectively represent the elevated view and the plan view of the whole pincer according to the finding;
- figs. 18 and 19 (Tav. VIII) represent the work steps of the pincer according to the finding, in two different types of movement of products.

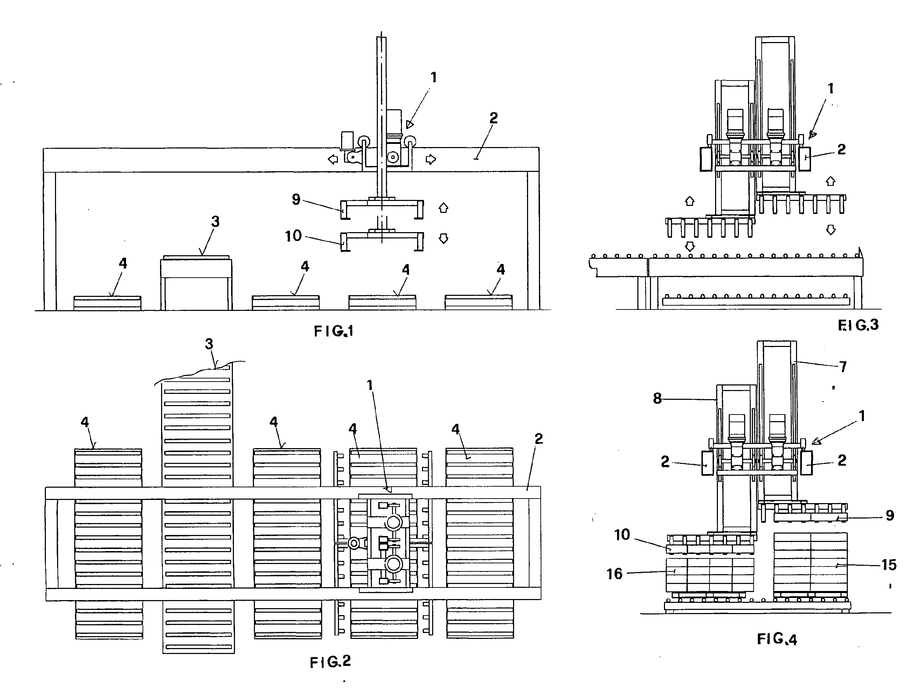

As can be seen in figs. 1-3, the discharge group, wholly indicated with reference numeral 1, can slide horizontally and in an alternating manner on beams 2, constituting the bridge which lies over the feeding plane 3 and the discharge planes 4, for example consisting of roller units.

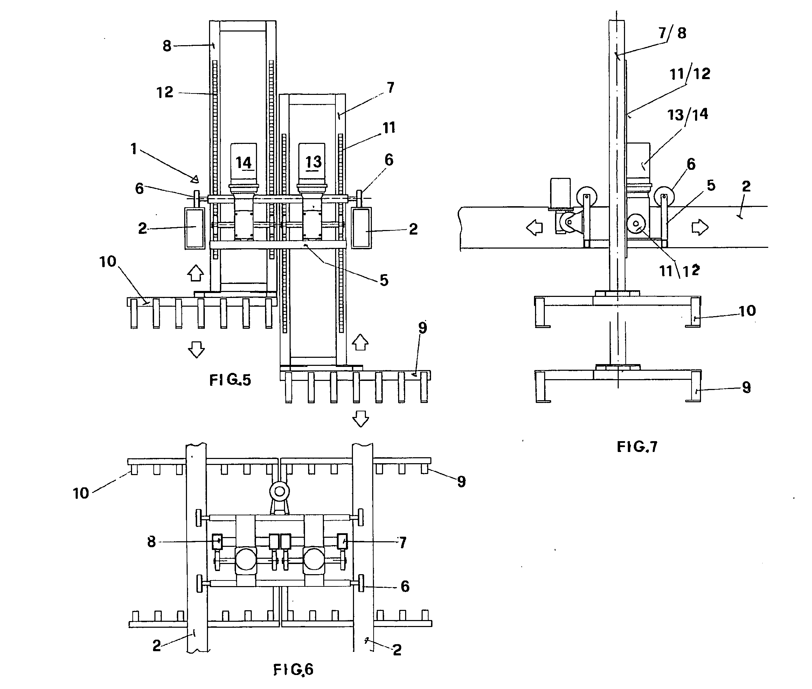

As can be seen, in particular, in figs. 5 to 7, the discharge group 1 is made up of a trolley 5, equipped with wheels 6, which supports two columns 7 and 8, each equipped with a pair of pincers, 9 and 10 respectively, said columns being able to slide vertically in the two directions and moved autonomously and independently from each other through rack controls 11 and 12, moved by respective motors 13 and 14.

As can be seen in fig. 4, with such a constructive solution it is thus possible to realise piles 15 and 16 of different products, in different periods of time.

To better highlight the advantages of the finding we describe the operating steps for the moving of three panels 20, 21 and 22, which have different widths and lengths, to be picked up by the roller unit 3.1 and to be deposited on the three distinct roller units 4.1, 4.2 and 4.3.

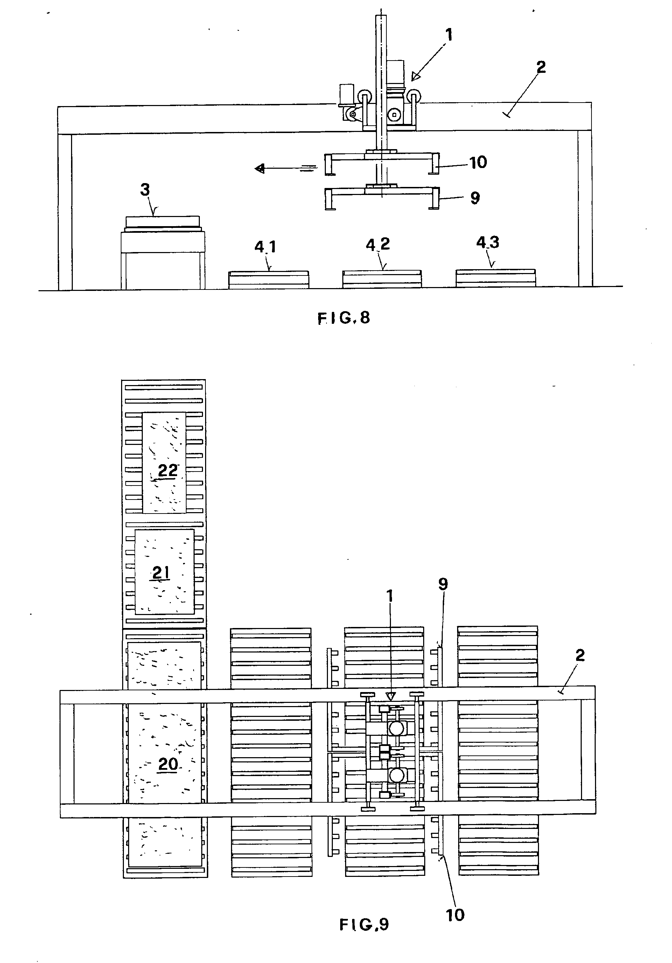

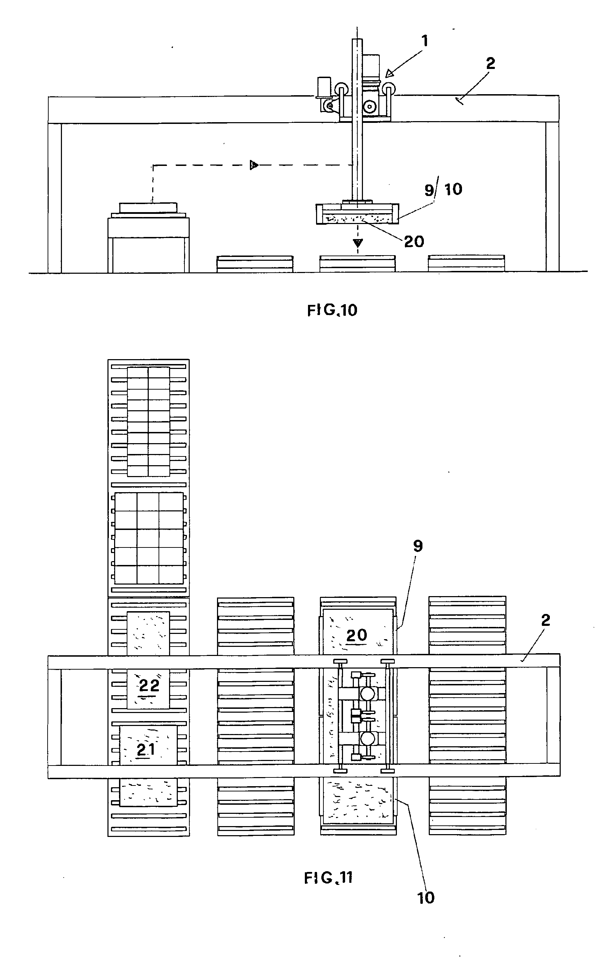

The starting situation (figs. 8, 9) where the three panels 20, 21 and 22 are in the loading roller unit and the discharge group 1, with the pincers open, is able to slide on the bridge, is followed by the first gripping step (figs. 10, 11), in which both the pairs of pincers 9 and 10 engage the panel 20 which, with the combined movement of the trolley 5 and of the columns 7 and 8, is deposited on the intermediate roller unit 4.2.

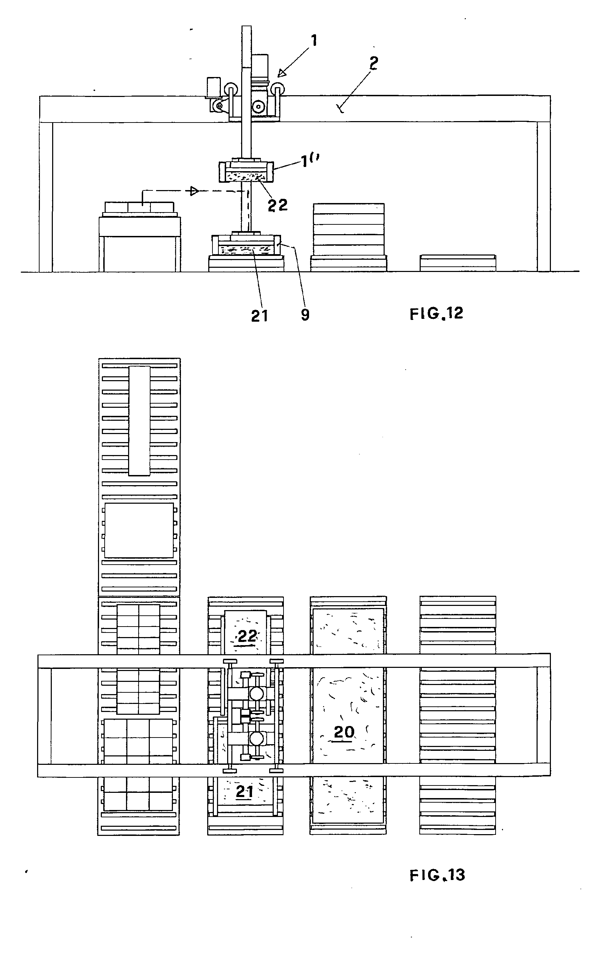

Then the discharge group 1 returns above the roller unit 3.1 and engage the two panels 21 and 22 with the respective pairs of pincers 9 and 10 to then go back above the roller unit 4.1 (figs. 12, 13) where the depositing of the panel 21 takes place.

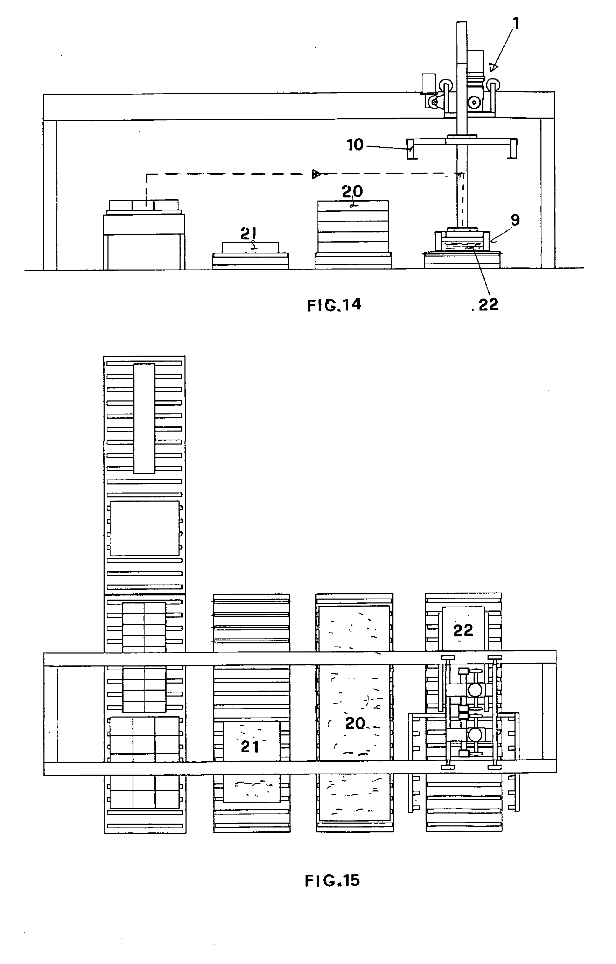

Then, with the pair of pincers 9 lifted and open, the discharge group 1 continues the displacement until it goes above the roller unit 4.3 (figs. 14, 15), where the depositing of the panel 22 takes place.

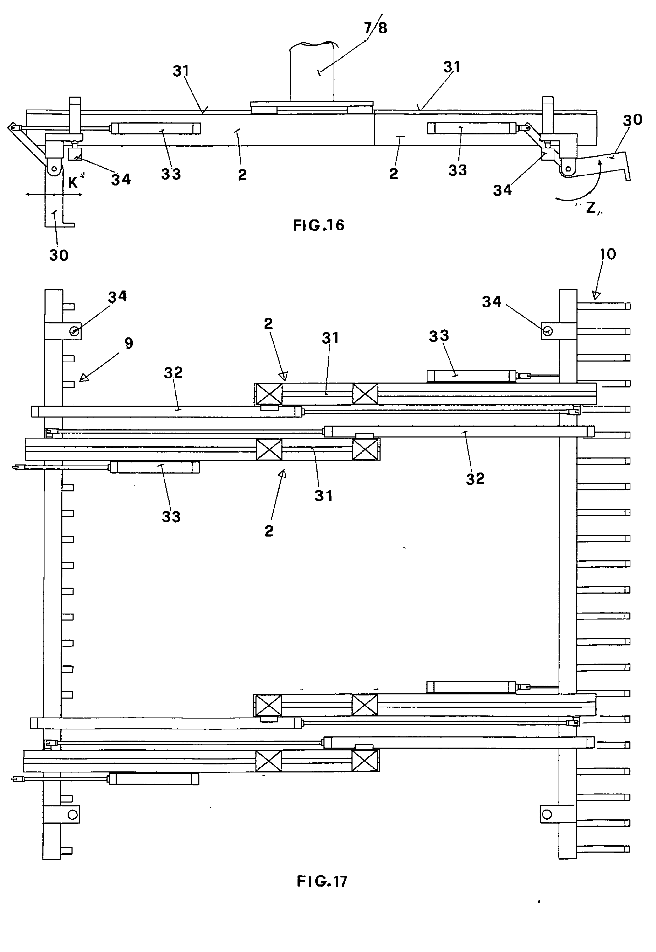

As can be seen in figs. 16 and 17, the finding also foresees that each of the two arms 30, of each pincer 9 and 10, supported by the respective beams 31, be equipped with alternating rectilinear translational movement (see arrow "K"), realised through the action of the cylinder 32 and with the angular rotational movement (see arrow "Z") realised through the action of the cylinder 33.

Finally, a presser 34, which allows the canti-levered moving of the panels, is also associated with each arm.

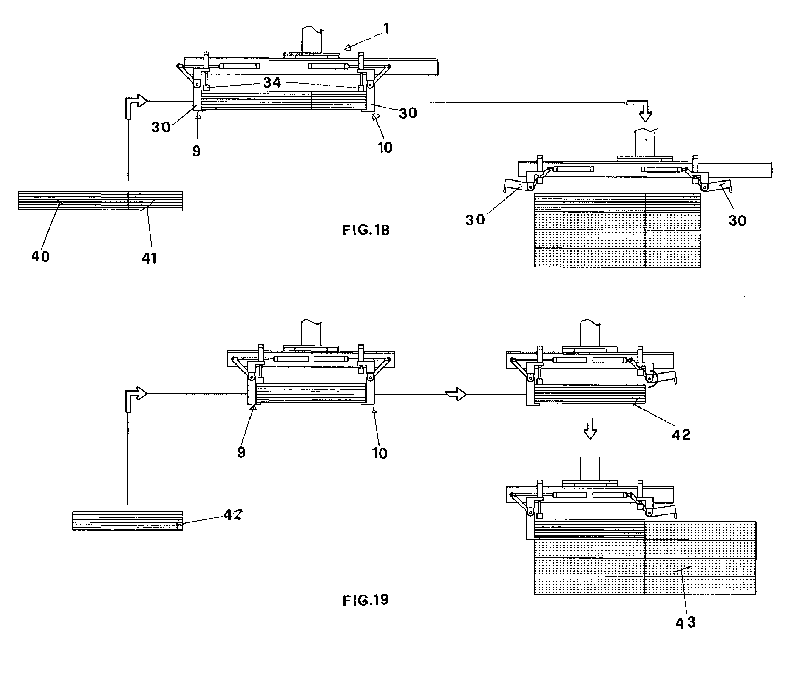

The advantages deriving from the use of such mobile pincers are highlighted in the drawings of figs. 18 and 19 where, in fig. 18, the movement of two panels 40 and 41, arranged misaligned and having different widths, made possible by the linear displacement of the arms, is represented, whereas the depositing of a panel 42 on a pile 43 at a different level, made possible by the angular rotation of at least one of the two arms, is represented in fig. 19.

## Claims

1. CONTROLLED-OPENING DISCHARGE DEVICE FOR MOVING PRODUCTS such as panels made from wood, plastic, polystyrene, and the like, which takes care of picking up said products arranged in series on a single plane to reposition them on another work plane, individually or piled on top of each other, so as to form piles with a predetermined number, type and size of the panels themselves
said discharge group being **characterised in that**
the trolley, which slides on a bridge, supports at least two columns which act as gripper heads.

2. DISCHARGE GROUP, according to claim 1, **characterised in that** the gripper heads are independent from each other.

3. DISCHARGE GROUP, according to claims 1 and 2, **characterised in that** each pair of pincers, coupled with to two or more columns, can simultaneously pick up products of different widths and deposit them in different periods of time, on the same work plane or on distinct planes.

4. DISCHARGE GROUP, according to claims 1 and 2, **characterised in that** the movement of the trolley, of the two or more columns and the opening/closing of the pincers takes place through a PLC program, which reads the type and size of the different panels or plates going in and, consequently, defines the working parameters of the discharge group itself, in particular in which order and in which discharge zone to deposit each individual panel or a pack of panels.

5. DISCHARGE GROUP, according to one or more of the previous claims, **characterised in that** the arms of each pair of pincers can move independently from each other.

6. DISCHARGE GROUP, according to claim 5, **characterised in that** the two movements of each arm, that of translation on the support bar and that of angular rotation about its axis, are controlled by distinct and independent devices, which allows an asymmetric displacement of the two arms with respect to the central axis of the support bar itself.

7. DISCHARGE GROUP, according to one or more of the previous claims, **characterised in that** a presser, which allows the canti-levered transportation of the panels, is associated with each arm.

8. DISCHARGE GROUP, according to one or more of the previous claims, capable of sliding horizontally and in an alternating manner on beams (2), constituting the bridge which lies over the feed plane (3) and the discharge planes (4) consisting of roller units, **characterised in that** it comprises a trolley (5), equipped with wheels (6), which supports two columns (7, 8), each of said columns being able to slide vertically in the two directions and moved autonomously and independently from each other through the rack controls (11, 12), moved by the respective motors (13, 14).

9. DISCHARGE GROUP, according to one or more of the previous claims, **characterised in that** it can realise piles (15, 16) of different products both simultaneously and/or at different times.

10. DISCHARGE GROUP, according to claim 8, **characterised in that** each of the two arms (30) of each pincer (9, 10), supported by the respective beams (31), is equipped with alternating rectilinear translational movement ("K"), realised through the action of the cylinder (32) and with the angular rotational movement ("Z"), realised through the action of the cylinder (33).

11. DISCHARGE GROUP, according to claim 10, **characterised in that** a presser (34), which allows the canti-levered movement of the panels, is associated with each arm (30).
